# EUROPEAN PATENT APPLICATION

(11) **EP 4 851 840 A1**
(43) Date of publication of application: **09.12.2026**
(21) Application number: 25181530.4
(22) Date of filing: 07.06.2025
(51) Int. Cl.: G06F 21/60, G06F 21/62, H04L 9/08, H04L 9/32

(54) **METHOD AND APPARATUS FOR STORING A DATA MESSAGE IN A DATA STORAGE, AND METHOD AND APPARATUS FOR RETRIEVING A DATA MESSAGE FROM A DATA STORAGE**

(71) Applicant: Deutsche Telekom AG, 53113 Bonn (DE); Technische Universität München, 80333 München (DE)
(72) Inventor: GEITZ, Marc, 58089 Hagen (DE); NILESH, Kumar, 80333 München (DE); BOCHE, Holger, 10318 Berlin (DE); DEPPE, Christian, 38106 Braunschweig (DE)
(74) Representative: 2SPL Patentanwälte PartG mbB

(57) **Abstract**

Provided is a method for storing a data message in a data storage. The method includes applying at least one challenge to a Quantum Physically Unclonable Function to obtain at least one quantum response. In addition, the method includes encoding the data message based on the at least one quantum response to generate a codeword. The method further includes storing the codeword in the data storage.

## Description

### Field

The present disclosure relates to data storage and retrieval. In particular, examples of the present disclosure relate to a method and an apparatus for storing a data message in a data storage as well as a method and an apparatus for retrieving a data message from a data storage.

### Background

Modern data storage systems, such as those used in cloud computing and the Internet of Things (IoT), face growing demands for both secure storage and efficient retrieval of information. Users often store sensitive data on public servers, requiring trust that the information will remain confidential even though they lack direct control over the storage medium.

An alternative approach involves using Physically Unclonable Functions (PUFs), which are hardware devices that serve as unique fingerprints for secure key generation and authentication. However, classical PUFs are vulnerable to powerful machine-learning attacks that can create a predictive model of the device, effectively cloning it and breaking its security. The looming threat of quantum computing also poses a risk to conventional cryptographic methods. To address these issues, Quantum PUFs (QPUFs) have been developed, leveraging quantum mechanical principles to provide inherent security against both classical and quantum adversaries. Despite these advancements, challenges remain in controlling information leakage in practical applications.

Hence, there may be a demand for improved data storage and retrieval.

### Summary

This demand is met by a method for storing a data message in a data storage as well as a method for retrieving a data message from a data storage in accordance with the independent claims. Further embodiments are defined by the dependent claims.

According to a first aspect, the present disclosure provides a method for storing a data message in a data storage. The data message is a (e.g., confidential) information, such as a bit string, that is intended for secure storage. The data storage may be any private (not publicly accessible) or public (publicly accessible) storage medium, such as a hard disk, a solid-state drive, a flash memory, a cloud storage or database, a key-value store or a distributed ledger (e.g., a blockchain).

The method comprises applying at least one challenge (input) to a QPUF to obtain at least one quantum response. A QPUF is a physical device configured to, owing to its unique microscopic physical structure and quantum interactions, produce a unique and unpredictable output in response to a given input. The behavior of the QPUF is governed by a devicespecific transformation and is rendered unclonable by the principles of quantum mechanics, such as the no-cloning theorem, and variations inherent to its manufacturing process. The at least one challenge may be a single or multiple (e.g., a sequence of) classical or quantum input signals applied to the QPUF to elicit a response. For example, the at least one challenge may be at least one classical signal (e.g., a digital signal) or at least one quantum signal (e.g., specific qubit states or photon pulses). The at least one challenge may be transmitted to the QPUF over a classical communication channel, for instance, via fiber, Ethernet or Wi-Fi. This communication may utilize standardized IT protocols such as HTTP, HTTPS, RPC, JSON or streaming protocols. When a classical challenge is received by the QPUF, the device internally converts it into a quantum state for its operation. In other words, the at least one challenge may be one or more stimuli used to query the QPUF 's unique physical properties. In response, the QPUF provides at least one quantum response - one per applied challenge. A quantum response is the resulting one or more quantum states produced by the QPUF after processing a challenge. The respective quantum response may be or indicate a single quantum state or a sequence of multiple individual quantum states. In case of multiple quantum responses for multiple applied challenges, the multiple quantum responses may form a composite quantum state such as a tensor product of multiple quantum responses. Applying a sequence of challenges to generate a corresponding sequence of quantum responses may yield a greater amount of randomness for more robust security.

In addition, the method comprises encoding the data message based on the at least one quantum response to generate a codeword. The encoding operation uses the at least one quantum response from the QPUF to transform the data message into a secure format. For instance, this encoding operation may involve using the randomness derived from the at least one quantum response to mask the original data, ensuring the output of the encoding function (i.e., the codeword) is statistically independent of the input data message. The generated codeword is the resulting (e.g., public) storage data, representing the encoded form of the data message. The method further comprises storing the codeword in the data storage.

The method according to the first aspect allows to achieve information-theoretic security for the stored data message. As the QPUF is physically unclonable, only a party with access to the specific QPUF device used for encoding may generate the correct at least one quantum response needed for decoding. An unauthorized party, lacking access to this specific device, cannot reproduce the necessary at least one quantum response and is therefore prevented from accessing the data message. This ensures that the stored codeword reveals negligible information about the original data message, even to an adversary with very high computational power. Furthermore, the method according to the first aspect provides robust protection against modeling attacks, which are a major vulnerability for classical PUFs. The use of quantum states as responses, combined with the no-cloning theorem and the indistinguishability of non-orthogonal states, prevents an adversary from collecting the challenge-response pairs needed to build a predictive model of the QPUF. Any attempt to intercept and measure the quantum response would disturb it, thereby providing a means to detect malicious activity and preserving the security of the system. Consequently, the method according to the first aspect allows the codeword to be stored securely in a public, untrusted environment without revealing the underlying secret (i.e., the content of the data message).

In some examples of the present disclosure, encoding the data message comprises deriving a classical key from the at least one quantum response and encoding the data message based on the derived classical key. Deriving the classical key extracts a classical string of information from the one or more quantum states indicated by the one or more quantum responses. This conversion of the unpredictable information contained within the QPUF's at least one quantum response into a usable, classical format bridges the quantum output of the QPUF with the classical domain of the data message. The resulting classical key is a random bit string whose randomness is inherited directly from the quantum properties of the QPUF. Deriving a classical key first allows the encoding of the data message to be performed using computationally efficient classical operations, such as a bitwise XOR or modular addition. This avoids the need for complex quantum-to-quantum encoding logic and allows the encoding function to be implemented on standard classical hardware like Field Programmable Gate Arrays (FPGAs) or Central Processing Units (CPUs), simplifying the system architecture. Furthermore, this enables the implementation of a one-time pad, a highly secure cryptographic primitive. The derived classical key functions as the one-time pad that masks the data message. Because the key is generated from the QPUF's at least one quantum response and is therefore random and independent of the data message, the resulting codeword is statistically independent of the original data message. This achieves a state of perfect secrecy, where an attacker who intercepts the codeword can gain no meaningful information about the secret data it represents.

According to some examples of the present disclosure, deriving the classical key from the quantum response comprises measuring the at least one quantum response at least once to obtain a raw classical key and generating the classical key by processing the raw classical key to increase its statistical uniformity. The at least one quantum response, which is the output of the QPUF, may be physically realized in various forms. For instance, the one or more quantum states that constitute the respective quantum response may comprise photons with various encodings, states in fermionic or bosonic gases, superconducting or superfluid systems, or atomic systems. Measuring the at least one quantum response is the physical operation that interacts with these quantum states to extract a classical string of bits. This measurement collapses the quantum state into a classical outcome. One exemplary way this is performed is by using a quantum measurement followed by a Classical-Quantum Slepian-Wolf protocol to extract the classical information. The (direct) result of this measurement is the raw classical key, which is the initial, unprocessed classical bit string obtained from the quantum response. This key is considered "raw" because, while random, it may not be perfectly uniform due to minor biases in the physical QPUF or the measurement apparatus. To ensure the final key is cryptographically secure, the raw classical key undergoes processing to increase its statistical uniformity. Statistical uniformity is a property of a classical key where every possible sequence of bits has an equal probability of occurring, ensuring there are no predictable patterns. Processing the raw classical key to increase its statistical uniformity may, e.g., comprise the application of a cryptographic function to the raw classical key. This function distills a shorter, but nearly perfectly uniform, final classical key from the potentially longer, less-uniform raw key. This refinement ensures the final key has high-quality randomness, which is beneficial for security protocols like a one-time pad. The two-stage derivation of the key produces a classical key with high statistical uniformity, which is beneficial for the security of the encoding. A key with biases could be exploited by an attacker, but the post-measurement processing eliminates these vulnerabilities. This also makes the method according to the first aspect more robust against physical imperfections in the QPUF hardware. By refining the raw output, a secure and reliable key may be generated even from an imperfect physical source. The separation of obtaining a raw key via measurement and then refining it guarantees the quality of the resulting key, which directly supports the implementation of perfect secrecy for the stored data message.

In some examples of the present disclosure, processing the raw classical key comprises at least one of privacy amplification or hashing. Privacy amplification is a cryptographic technique for distilling a shorter, highly secure key from a longer, partially compromised or nonuniform raw key. This technique applies a specific function, such as a universal hash function, to the raw key to produce a final key about which an adversary has negligible information. In other words, privacy amplification purifies the randomness of the raw key, eliminating potential biases or information leakage to yield a final key with high statistical uniformity and entropy. Alternatively or in addition, the raw key may be processed using hashing. Hashing is a one-way function that maps an input of arbitrary size, such as the raw key, to a fixed-size output. This provides a deterministic and computationally efficient method to transform the potentially long raw key into a standardized, fixed-length final key. The use of these specific cryptographic techniques provides a mathematically rigorous foundation for the security of the resulting classical key. Privacy amplification offers a provable guarantee that the resulting classical key is secure, even if the raw key generated from the QPUF's at least quantum response has minor imperfections or biases. Hashing provides a fast and standardized way to perform the randomness extraction on classical hardware. Both techniques allow to transform the physically-generated raw key into a cryptographically-strong key suitable for achieving perfect secrecy when encoding the data message

According to some examples of the present disclosure, the method according to the first aspect further comprises deriving a second classical key from the at least one quantum response subsequent to measuring the quantum response, and encoding a second data message based on the second classical key. The derivation of the second key occurs after the initial quantum measurement used to obtain the first key has been performed. This is possible because a quantum measurement followed by a Classical-Quantum Slepian-Wolf protocol does not necessarily destroy the entire quantum state. The first measurement yields the classical information for the first secret key, leaving the underlying quantum state only slightly disturbed. This remaining, post-measurement "leftover state" still contains usable quantum information. A subsequent measurement may then be reapplied to this leftover state to conduct a second round of key extraction, yielding the second classical key. The second classical key is a distinct, secret bit string derived from this remaining, post-measurement quantum state (i.e., the second classical key is different/separate from the first classical key). This key is then used to encode a second data message, which is another, separate portion of (confidential) information intended for secure storage (i.e., the second data message is different/separate from the first data message). The reusability of a single set of quantum responses (comprising the one or more quantum responses) provides a significant efficiency advantage. It allows multiple, independent storage operations to be amortized over a single QPUF challenge-response instance. This is a capability not found in classical PUF systems, where each enrollment typically consumes a fresh challenge to maintain security. The ability to extract more than one key from a single set of initial quantum responses is a direct consequence of the quantum mechanical principles governing the interaction, where a first measurement leaves a "leftover state" that may be measured again for a second round of key extraction.

In some examples of the present disclosure, encoding the data message based on the derived classical key comprises bitwise XORing the data message and the classical key. Bitwise XORing is a logical operation that takes two bit strings of equal length - in this case, the data message and the classical key - and produces a third bit string where each output bit is the result of an exclusive OR (XOR) operation on the corresponding bits of the two input strings. This operation compares the two strings bit by bit. The output bit is 1 if the corresponding input bits are different, and 0 if they are the same, effectively scrambling the original data message. Bitwise XORing is computationally efficient and one of the fastest logical operations available on standard classical hardware, which allows the encoding to be performed with minimal latency and computational resources. This is particularly beneficial for resource-constrained devices. Furthermore, the XOR operation is perfectly reversible. The original data message may be recovered by performing the exact same bitwise XOR operation on the codeword and the identical classical key. This symmetry simplifies the design of the decoding function, making it as efficient as the encoding function. Bitwise XORing further enables the implementation of the one-time pad cryptosystem. When a statistically uniform classical key, such as the one derived from the QPUF's at least one quantum response, is combined with the data message using XOR, the resulting codeword is also statistically uniform and reveals no information about the original message. This specific implementation directly achieves a state of perfect secrecy.

According to some examples of the present disclosure, the classical key has a length at least as great as a length of the data message. The length refers to the number of bits in a bit string. In other words, the total count of bits that constitute the classical key is equal to or greater than the total count of bits in the data message it is intended to encode. The correspondence in length between the key and the data message prevents any part of the key from being reused to encrypt different parts of the data message. Reusing a key would create patterns in the resulting codeword, which could be exploited by an attacker through statistical analysis to gain information about the original message. When the classical key is at least as long as the data message, each bit of the data message is masked with a unique, non-repeating bit from the classical key. This one-to-one mapping with a statistically uniform key results in a codeword that is also statistically uniform and bears no discernible correlation to the original data message. This directly achieves a state of perfect secrecy, where the codeword reveals negligible information about the original data message, even to an adversary with very high computational power.

In some examples of the present disclosure, encoding the data message comprises generating error-correction data. In these examples, the method according to the first aspect further comprises storing the error-correction data together with the codeword in the data storage. The error-correction data (which may be understood as helper data) is auxiliary information created during encoding to mitigate discrepancies that may arise from the physical nature of the QPUF. The error-correction data may, e.g., be generated as part of a Classical-Quantum Slepian-Wolf protocol together with the classical key. Physical systems like QPUFs may be susceptible to noise, which may cause the at least one quantum response at retrieval to be a "noisy version" of the original at least one quantum response from enrollment. The error-correction data provides a mechanism to compensate for these variations. The error-correction data is generated to enable that the classical key derived from the QPUF's at least one quantum response during the decoding operation matches the classical key that was originally derived during encoding. This precise alignment of the keys between encoding and decoding enables the correct recovery of the data message. For instance, when a bitwise XOR operation is employed, the identical key must be used for decoding to accurately reverse the operation. If the keys differ, even slightly, the XOR operation will not yield the original data message. By storing the error-correction data, the legitimate user, upon retrieval, may use this information for "noise correction" to reconstruct the correct classical key, thereby enabling the reliable recovery of the original data message with an arbitrarily small error probability. Storing the error-correction data together with the codeword may be implemented in different ways. In one example, data M stored in the data storage may be a single entity comprising two parts, *(M1, M2),* where M1 is or comprises the error-correction data (i.e., helper data for error correction) and M2 is the codeword representing the masked data message. The pair is then stored as a single entry in the data storage. Alternatively, the error-correction data and the codeword may be stored as separate but logically linked entries within the data storage.

According to some examples of the present disclosure, the method according to the first aspect further comprises storing an identifier for the at least one challenge together with the codeword in the data storage. The identifier (which may be understood as helper data) is a data value, such as an index, that indicates (uniquely corresponds to) the specific challenge or challenge sequence applied to the QPUF during encoding. The identifier may, e.g., act as a label that records which of a potential plurality of challenges was used for a particular encoding operation. It may, e.g., be generated during encoding by noting which challenge was selected from a set of possible challenges. Storing an identifier for the at least one challenge allows to flexibly use a large set of different challenges, rather than being restricted to a single one. This enhances the operational capacity and security of the method according to the first aspect. In such a multi-challenge environment, the identifier provides for the reliable retrieval of the data message. At the time of retrieval, the legitimate user reads the stored identifier to determine which challenge to apply to the QPUF. This ensures the consistency of the challenges between encoding and decoding, which enables the correct classical key to be regenerated for successful decoding of the codeword. Storing the identifier together with the codeword may be implemented in different ways. In one example, data M stored in the data storage may be a single entity comprising two parts, *(M1, M2),* where *M1* is or comprises the identifier (i.e., helper data for identifying the at least one challenge applied during enrollment of the data message) and M2 is the codeword representing the masked data message. The pair is then stored as a single entry in the data storage. Alternatively, the identifier and the codeword may be stored as separate but logically linked entries within the data storage.

In some examples of the present disclosure, the data storage is a key-value store. In these examples, the data message is intended to be stored as a value in the key-value store. The method according to the first aspect further comprises in these examples encoding a plaintext key for the data message based on the at least one quantum response to generate an encrypted key and storing the encrypted key in the key-value store together with the codeword. A key-value store is a data storage where data is stored as a collection of key-value pairs, such that each unique key is associated with a corresponding value. The plaintext key is the original, unencrypted identifier for a piece of data, while the value is the data itself. In this context, the value is the secure codeword containing the encoded data message. In these examples, the method according to the first aspect involves encoding not only the data message (which becomes the value) but also its corresponding plaintext key. This encoding uses the randomness derived from the QPUF's at least one quantum response to transform the plaintext key into an encrypted key. The encrypted key is the scrambled, secure version of the lookup key, and it is this encrypted key that is stored in the data storage. This provides confidentiality for the lookup terms themselves. In many systems, the data values may be encrypted, but the keys used to access them are not, which may leak sensitive information about the nature of the stored data. By encrypting the plaintext key, the method according to the first aspect obscures the context of the data being accessed. An observer of the key-value store sees only meaningless encrypted keys and codewords, not the original, potentially sensitive, lookup terms. Furthermore, this provides a form of secure, hardware-bound access control. To retrieve a piece of data, a legitimate user must first generate the correct encrypted key. They do this by applying the QPUF's response to their desired plaintext key. An attacker without the specific QPUF cannot generate the correct encrypted key and is therefore unable to query the database for the desired value, even if they know the plaintext key. This application of the QPUF's security to both the key and the value enhances the overall confidentiality and security of the data storage system.

According to a second aspect, the present disclosure provides a method for retrieving a data message from a data storage. The method comprises retrieving a codeword from the data storage. The data storage and the codeword are as described above for the method according to the first aspect. For example, obtaining the codeword may comprise accessing the data storage and retrieve the codeword (e.g., by querying the codeword or a related key). In addition, the method according to the second aspect comprises applying at least one challenge for a QPUF previously used for encoding the data message to the QPUF to obtain at least one quantum response. In other words, the method comprises applying to the QPUF the at least one challenge previously used for the QPUF during an enrollment of the data message in the data storage, to obtain one or more quantum responses. For retrieval, the same at least one challenge (i.e., the same single challenge or challenge sequence) originally used for encoding the data message is applied again to the identical QPUF device. The at least one challenge may be transmitted to the QPUF analogously to what is described above for the method according to the first aspect. In other words, the retrieval is conditioned upon stimulating the original QPUF device with the original challenge stimulus. This application of the original stimulus to the same physical device prompts the QPUF to generate a new quantum response that is highly correlated with the original response from enrollment. The method further comprises decoding the codeword based on the at least one quantum response to recover the data message. The decoding operation uses the information contained within the newly generated quantum response to reverse the original encoding.

The method according to the second aspect provides secure, keyless access to the data message. A legitimate party does not need to store, protect, or manage any traditional secret keys, as the key is physically embodied by the QPUF and is regenerated on demand. Furthermore, this provides authentication by possession. Access to the data message is therefore protected by two independent factors: physical possession of the specific QPUF device used for enrollment, and knowledge of the specific challenge that was applied. Both factors are necessary for decoding, as only the correct challenge(s) applied to the correct QPUF may reproduce the information needed to recover the data message. An attacker who only obtains the codeword from the database is unable to recover the data message without satisfying both of these conditions.

According to some examples of the present disclosure, decoding the codeword based on the at least one quantum response to recover the data message comprises deriving a classical key from the at least one quantum response and using the classical key in decoding the codeword to recover the data message. Deriving the classical key on the retrieval side mirrors the key derivation during the initial encoding. The classical key is extracted from the new quantum response that is generated by applying the original challenge(s) to the QPUF. The properties of the QPUF ensure that this new response is highly correlated with the original one, which allows for the regeneration of the original classical key. Once the classical key has been regenerated, it is used to reverse the encoding operation performed on the data message. The regenerated key is combined with the retrieved codeword to recover the original data message. Deriving and then using the classical key for decoding offers a clean separation between the quantum and classical domains of the method. The quantum part is limited to the QPUF and its response. The subsequent decoding operations, such as a bitwise XOR or modular subtraction, are purely classical and computationally efficient, allowing them to be implemented on standard hardware like CPUs or FPGAs. This results in a symmetric and efficient design, where the decoding logic mirrors the encoding logic, simplifying the overall system architecture.

In some examples of the present disclosure, deriving the classical key from the at least one quantum response comprises measuring the at least one quantum response at least once to obtain a raw classical key and generating the classical key by processing the raw classical key to increase its statistical uniformity. This two-stage derivation of the classical key during retrieval mirrors the equivalent operation on the encoding side. The at least one quantum response obtained during retrieval is first measured to extract a classical bit string, which constitutes the raw classical key. As previously described, this measurement may involve interacting with various physical realizations of the quantum states, such as photons or atomic systems, to collapse them into classical outcomes. The measurement may be as described above for the method according to the first aspect. The raw classical key, which may contain minor imperfections or biases due to the physical nature of the QPUF, then undergoes processing to increase its statistical uniformity. This refinement, which may involve techniques such as privacy amplification or hashing as described above, distills the high-quality classical key used for decoding. This two-stage approach on the retrieval side ensures a reliable regeneration of the original classical key. The initial measurement extracts the core information from the correlated quantum response(s), while the subsequent processing refines this information, compensating for physical variations to produce a classical key that is (substantially) identical to the one used for encoding. This reliable key regeneration enables the correct reversal of the encoding operation and the recovery of the original data message with an arbitrarily small error probability.

According to some examples of the present disclosure, using the classical key in decoding the codeword to recover the data message comprises bitwise XORing at least part of the codeword and the classical key. This operation is the direct inverse of the encoding operation described above. The regenerated classical key is combined with the retrieved codeword using a bitwise XORing operation. The XOR logical operation is its own inverse - applying the same key twice returns the original data message. Because the regenerated key is identical to the key used for encoding, this operation perfectly reverses the initial masking and restores the original data message. The selection of bitwise XOR as the decoding function provides several benefits. The operation is computationally efficient and one of the fastest logical operations available on standard classical hardware, which allows the decoding to be performed with minimal latency and computational resources. This results in a symmetric and simple system design, where the decoding logic is identical to the encoding logic. There is no need for separate, complex decryption algorithms, as the same simple, reversible function is used for both encoding and decoding.

In some examples of the present disclosure, the method according to the second aspect further comprises retrieving error-correction data stored together with the codeword in the data storage. The error correction data may be retrieved in various ways together with the codeword. For example, data *M* retrieved from the data storage may be a single entity comprising two parts, (*M*1*,M*2)*,* where *M*1 comprises (is) the error-correction data and *M*2 is the codeword representing the masked data message. When this pair is retrieved, both the helper data and the codeword become available to the decoder. Alternatively, if the error-correction data and the codeword were stored as separate but logically linked entries, the retrieval may involve fetching both entries. In these examples, the codeword is decoded using the error-correction data. The retrieved error-correction data is helper data generated during the encoding of the data message. The error-correction data enable the reliable recovery of the original data by providing a mechanism to compensate for minor variations that may occur in the physical QPUF's responses between the time of encoding and retrieval. For example, the retrieved error-correction data may be used in deriving the classical key from the at least one quantum response. It may be employed to perform "noise correction" to ensure that the classical key regenerated during the decoding operation is identical to the classical key that was originally used for encoding. This precise alignment of the keys enables the correct recovery of the data message. For example, if a bitwise XOR operation was used for encoding, an identical key must be used to reverse the operation accurately. By using the retrieved error-correction data to reconstruct the correct classical key, the legitimate party may reliably recover the original data message with an arbitrarily small error probability.

According to some examples of the present disclosure, the method according to the second aspect further comprises retrieving an identifier for the at least one challenge stored together with the codeword in the data storage. The identifier acts as a label or index that indicates (uniquely points) to the specific challenge or challenge sequence that was used to encode the particular data message. The identifier may be retrieved in various ways together with the codeword. For example, data M retrieved from the data storage may be a single entity comprising two parts, (*M*1*, M*2)*,* where *M*1 comprises (is) the identifier and *M*2 is the codeword representing the masked data message. When this pair is retrieved, both the index for identifying the at least one challenge applied during enrollment of the data message and the codeword become available to the decoder. Alternatively, if the identifier and the codeword were stored as separate but logically linked entries, the retrieval may involve fetching both entries. In these examples, the at least one challenge applied to the QPUF is selected based on the retrieved identifier. Once retrieved, the identifier may, e.g., be used to select the correct challenge(s) from a set of possible challenges. The at least one selected challenge is then applied to the QPUF to generate the new quantum response for decoding. This mechanism ensures the consistency of the challenges between the encoding and decoding operations. Using a stored identifier to select the appropriate challenge makes a flexible, multi-challenge system practical and reliable. It allows to manage and correctly use a large set of different challenges for different encoding operations. By retrieving the identifier and using it to apply the exact same challenge that was used for encoding, the method ensures that the QPUF produces a highly correlated quantum response. This is beneficial for the correct regeneration of the classical key and, consequently, for the successful and reliable recovery of the original data message.

In some examples of the present disclosure, the data storage is a key-value store and the codeword is stored as a value in the key-value store. In these examples, retrieving the codeword comprises encoding a (known) plaintext key for the data message (to be accessed) based on the at least one quantum response to generate an encrypted key and querying the key-value store using the encrypted key to retrieve the codeword. The (e.g., on-the-fly) encoding of the plaintext key during retrieval mirrors the original encoding that was performed when the key-value pair was first stored. The key-value store may, e.g., match the encrypted key to its index and return the associated value, which is the secure codeword containing the desired data message. This approach provides confidentiality for the queries themselves. An observer monitoring requests to the data storage will only see queries for seemingly randomly encrypted keys, not the original, potentially sensitive, plaintext keys. This protects the context and intent of the data retrieval operation. Furthermore, this provides a form of authenticated read access. Only a party with the correct QPUF and knowledge of the correct challenge(s) may generate the valid encrypted key needed to successfully query the database. An attacker without the specific QPUF is unable to generate the correct encrypted key and is therefore prevented from accessing the corresponding value.

According to a third aspect, the present disclosure provides an apparatus for storing a data message in a data storage. The apparatus comprises a QPUF. In addition, the apparatus comprises processing circuitry configured to apply at least one challenge to the QPUF to obtain at least one quantum response. The processing circuitry may be a dedicated hardware circuit, such as an Application-Specific Integrated Circuit (ASIC), or a function executed on a general-purpose processor like a CPU or Graphics Processor Unit (GPU). The apparatus further comprises an encoder configured to encode the data message based on the at least one quantum response to generate a codeword. The encoder is a functional unit, which may be implemented in hardware or software. The encoder may be implemented on classical systems such as FPGAs, CPUs, or GPUs, or on quantum computing systems. Additionally, the apparatus comprises an interface configured to store the codeword in the data storage. The interface may be a hardware or software component. For example, this may be a network interface for communicating with an external public data storage or a driver for writing to internal flash memory of the apparatus. In other words, the data storage may be internal or external to the apparatus. The various components of the apparatus, including the processing circuitry, encoder and interface, may be realized as separate physical devices connected via interfaces, or as integrated sub-elements or software-defined functions within a single device. The apparatus according to the third aspect may be a standalone device (i.e., be provided in a standalone housing) or be for integration into a user device such as a laptop or server. Analogously to the method according to the first aspect, the apparatus according to the third aspect allows to achieve information-theoretic security for the stored data message.

According to a fourth aspect, the present disclosure provides an apparatus for retrieving a data message from a data storage. The apparatus comprises a QPUF. In addition, the apparatus comprises an interface configured to retrieve a codeword from the data storage. The interface may be a hardware or software component. For example, this may be a network interface for communicating with an external public data storage or a driver for reading from internal flash memory of the apparatus. In other words, the data storage may be internal or external to the apparatus. The apparatus further comprises processing circuitry configured to apply at least one challenge for the QPUF previously used for encoding the data message to the QPUF to obtain at least one quantum response. The processing circuitry may be a dedicated hardware circuit, such as an ASIC, or a function executed on a general-purpose processor like a CPU or GPU. Additionally, the apparatus comprises a decoder configured to decode the codeword based on the at least one quantum response to recover the data message. The decoder is a functional unit, which may be implemented in hardware or software. The decoder may be implemented on classical systems such as FPGAs, CPUs, or GPUs, or on quantum computing systems. The various components of the apparatus, including the processing circuitry, decoder and interface, may be realized as separate physical devices connected via interfaces, or as integrated sub-elements or software-defined functions within a single device. The apparatus according to the fourth aspect may be a standalone device (i.e., be provided in a standalone housing) or be for integration into a user device such as a laptop or server. Analogously to the method according to the second aspect, the apparatus according to the fourth aspect allows to provide secure, keyless access to the data message.

According to a fifth aspect, the present disclosure provides a non-transitory machinereadable medium having stored thereon a program having a program code for performing the method according to the first aspect or the second aspect, when the program is executed on a processor or a programmable hardware.

According to a sixth aspect, the present disclosure provides a program having a program code for performing the method according to the first aspect or the second aspect, when the program is executed on a processor or a programmable hardware.

### Brief description of the Figures

Some examples of apparatuses and/or methods will be described in the following by way of example only, and with reference to the accompanying figures, in which
Fig. 1 illustrates a flowchart of an example of a method for storing a data message in a data storage;
Fig. 2 illustrates an example of an apparatus for storing a data message in a data storage;
Fig. 3 illustrates an exemplary data flow for storing a data message in a data storage;
Fig. 4 illustrates a flowchart of an example of a method for retrieving a data message from a data storage;
Fig. 5 illustrates an example of an apparatus for retrieving a data message from a data storage;
Fig. 6 illustrates an exemplary data flow for retrieving a data message from a data storage;
Fig. 7 illustrates an exemplary apparatus for data storage and retrieval;
Fig. 8 illustrates an exemplary user device comprising an integrated apparatus for data storage and retrieval; and
Fig. 9 illustrates an exemplary monolithic user device comprising an apparatus for data storage and retrieval.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A or B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

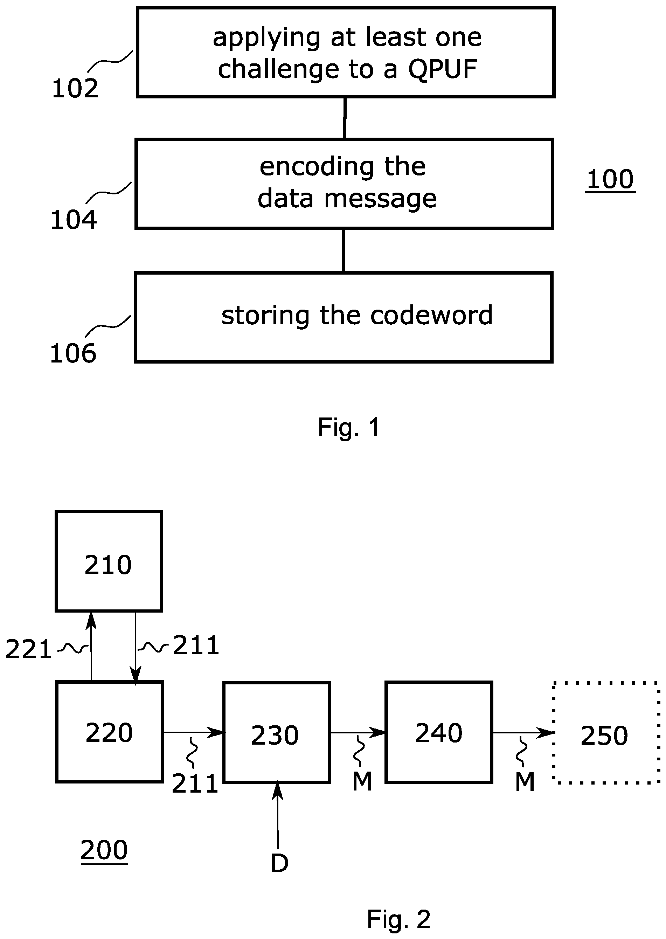

**Fig. 1** illustrates a flowchart of an exemplary method 100 for storing a data message in a data storage. The method 100 comprises applying 102 at least one challenge to a QPUF to obtain at least one quantum response. In addition, the method 100 comprises encoding 104 the data message based on the at least one quantum response to generate a codeword. The method 100 further comprises storing 106 the codeword in the data storage.

The method 100 allows to achieve information-theoretic security for the stored data message. Only a party with access to the specific QPUF device used for encoding may generate the correct at least one quantum response needed for decoding. An unauthorized party, lacking access to this specific device, cannot reproduce the necessary at least one quantum response and is therefore prevented from accessing the data message. This ensures that the stored codeword reveals negligible information about the original data message, even to an adversary with very high computational power.

More details and aspects of the method 100 are explained in connection with the proposed technique or one or more examples described above or below. The method 100 may comprise one or more additional optional features corresponding to one or more aspects of the proposed technique or one or more examples described or below.

In particular, further details of the method 100 will be described in the following with reference to **Fig. 2** illustrating a corresponding apparatus 200 for storing a data message *D* in a data storage 250. For example, the data message *D* may be a confidential message, which belongs to a set *D*, to be stored in encrypted form.

The data message *D* may, e.g., be a bit string that is to be securely stored. The data message *D* may received from a data source (not illustrated in Fig. 2). The data message *D* may be uniformly distributed or random. If the data message *D* is not uniformly distributed or random, the apparatus 200 may be configured to apply compression and randomization to convert the data message *D* into a uniformly distributed data message (e.g., the processing circuitry 220 or the encoder 230 described in greater detail in the following may perform this operation).

The data storage 250 may be internal or external to the apparatus 200. The data storage 250 may in some examples be a public (publicly accessible) data storage such as a cloud storage or database, a key-value store or a blockchain. In other examples, the data storage 250 may be a private (not publicly accessible) data storage such as a hard disk, a solid-state drive or a flash memory internal to the apparatus 200.

The apparatus 200 comprises a QPUF 210. The QPUF 210 is a physical device with an internal quantum architecture that produces outputs in response to input challenges. The behavior of the QPUF 210 is determined by its unique physical structure (e.g., nanoscale quantum dots or defects) and quantum interactions. When a challenge (input) is applied to the QPUF 210, it undergoes some fixed (e.g., unitary) transformation (specific to the device) and yields one or more resulting quantum states (the quantum response). Crucially, due to manufacturing variations and the quantum no-cloning principle, this challenge-response behavior is unique and cannot be duplicated by an adversary. The challenge may itself be a classical or quantum signal. The QPUF 210 outputs one or more quantum states that may be subsequently measured to extract classical or quantum information. In practice, only legitimate parties have access to the QPUF device 210 at enrollment (and retrieval), whereas an adversary does not.

Given a classical challenge *C*, the QPUF 210 outputs at least one quantum state ρ*_{X}* over some Hilbert space. The responses are inherently random and unclonable. ${ρ}_{X}^{⊗ n}$ denotes the tensor product of n such responses obtained by applying a challenge sequence *Cⁿ* (an enrollment sequence) and will be denoted as "quantum state" in the following. When the same or a related challenge is later applied, the QPUF 210 produces a correlated state ${ρ}_{Y}^{⊗ n}$ (accessible to the legitimate decoder and may be considered as noisy version of ${ρ}_{X}^{⊗ n}$) and possibly ${ρ}_{Z}^{⊗ n}$ to an adversary (if leakage is unavoidable, e.g. due to imperfect shielding). The joint statistics of $\left({ρ}_{X}^{⊗ n}, {ρ}_{Y}^{⊗ n}, {ρ}_{Z}^{⊗ n}\right)$ are governed by the physical QPUF characteristics (e.g., as in a quantum wiretap channel model). The encoder of a trusted party may fully measure or store ${ρ}_{X}^{⊗ n}$ during enrollment, while the decoder applies a quantum measurement to ${ρ}_{Y}^{⊗ n}$ during retrieval. The n superscript indicates that possibly many uses (n channel uses) or many qubits may be involved. The adversary, lacking access to the QPUF 210, cannot reproduce ${ρ}_{X}^{⊗ n}$ or learn a key derived from it without access to the QPUF 210.

In addition, the apparatus 200 comprises processing circuitry 220 configured to apply at least one challenge 221 to the QPUF 210 to obtain at least one quantum response 211 from the QPUF 210. The at least one challenge 221 may be a single or a sequence of classical or quantum input signals applied to the QPUF 210. The at least one challenge may be transmitted to the QPUF 210 over a classical communication channel, for instance, via fiber, Ethernet or Wi-Fi. This communication may utilize standardized IT protocols such as HTTP, HTTPS, RPC, JSON or streaming protocols. The processing circuitry 220 may be a dedicated hardware circuit, such as an ASIC, or a function executed on a general-purpose processor like a CPU or GPU.

The apparatus 200 further comprises an encoder 230 configured to encode the data message *D* based on the at least one quantum response to generate a codeword *M.* The encoder 230 may be implemented in hardware or software. The encoder 230 may be or run on a classical system such as an FPGA, a CPU or a GPU.

The at least one quantum response 211 generated by the QPUF 210 may be transmitted to the encoder 230 via a quantum communication channel, which is not shown in detail in Fig. 2 but is indicated schematically by the arrow pointing from the QPUF 210 towards the processing circuitry 220. The particular realization of this quantum channel depends on the specific design and implementation of the QPUF 210. For instance, in a photonic QPUF implementation, the quantum channel may comprise optical components such as dark fiber connections, beam splitters, polarizing beam splitters, phase shifters, delay lines and single-photon detectors, facilitating secure and low-loss transmission of quantum states. Alternatively, the at least one quantum response may be digitized immediately at the output interface of the QPUF 210, resulting in one or more classical signals transferred to the encoder 230. While this latter approach involves the transmission of sensitive quantum-derived information in an unsecured classical channel between the QPUF 230 and encoder 230, it may still be viable if the QPUF 210 and the encoder 230 are arranged securely within a common housing, limiting potential security risks from adversarial interference.

In general, the quantum channel may be established either directly between the QPUF 210 and the encoder 230 or between the QPUF 210 and an intermediate component, such as the processing circuitry 220 illustrated in Fig. 2. A direct quantum channel between the QPUF 210 and the encoder 230 may, for example, be used if the quantum response is not digitized immediately at the output of the QPUF 210. Conversely, a channel to an intermediate element, such as the processing circuitry 220, may be used if the quantum response is digitized immediately at the output interface of the QPUF 210.

When encoding the data message *D,* the encoder 230 may be configured to derive a classical key *S* from the at least one quantum response 211 and to encode the data message *D* based on the derived classical key *S.* When deriving the classical key *S* from the at least one quantum response 211, the encoder 230 may be configured to measure the at least one quantum response 211 at least once to obtain a raw classical key and generate the classical key *S* by processing the raw classical key to increase its statistical uniformity (e.g., performing privacy amplification and/or hashing). For example, a fixed challenge may be applied to the QPUF 210 to obtain a quantum response 211 with the quantum state ${ρ}_{X}^{⊗ n}$. From the quantum state ${ρ}_{X}^{⊗ n}$, a random classical string *S* (equivalent to a one-time pad key) may be extracted. For extracting the classical key *S,* a quantum measurement followed by Classical-Quantum Slepian-Wolf protocol may be performed. The classical key *S* may be derived such that the classical key *S* has a length at least as great as a length of the data message *D.*

The encoder 230 may be configured to generate the codeword *M* by bitwise XORing the data message *D* and the classical key *S,* i.e., *M = S* ⊕ *D.* This is analogous to a one-time pad: the data message *D* is masked by the random pad S. Other techniques such as modular addition may be used instead of XORing. The codeword *M* is then stored in the data storage 250 (e.g., a public database). Without knowing the classical key *S,* the codeword *M* reveals nothing about the data message *D.*

The apparatus 200 comprises an interface 240 configured to store the codeword *M* in the data storage 250. The interface 240 may be a hardware or software component. For example, if the public storage 250 is an external public data storage, the interface 240 may be a network interface for communicating with the external public data storage. If the public storage 250 is an internal private data storage, the interface 240 may, e.g., be a driver for writing the codeword *M* in the internal data storage of the apparatus 200.

The codeword *M* may optionally be stored together with helper data in the data storage 250 according to examples of the present disclosure. For example, the data *M* stored in the data storage 250 may be a single entity comprising two parts, (*M*1*, M*2)*,* where *M*2 is the codeword representing the masked data message *D* and M1 is the helper data. The pair (*M*1 , *M*2) is then stored as a single entry in the data storage 250. Alternatively, the helper data M1 and the codeword *M*2 may be stored as separate but logically linked entries within the data storage 250. The helper data *M*1 may, e.g., be or comprise error-correction data. The error-correction data may, e.g., be generated as part of a Classical-Quantum Slepian-Wolf protocol together with the classical key *S.* The error-correction data enable that the classical key *S* derived from the QPUF's at least one quantum response 211 during the decoding operation matches the classical key *S* that was originally derived during encoding. In other words, the helper data M1 may be any helper data to perform error correction in generating the secret key *S* when decoding the codeword *M*2*.* Alternatively or additionally, the helper data *M*1 may, e.g., be or comprise an identifier for the at least one challenge 221 applied to the QPUF during enrollment of the data message *D.* The identifier may, e.g., be generated during encoding the data message *D* by noting which challenge was selected from a set of possible challenges. Storing an identifier for the at least one challenge 221 allows to flexibly use a large set of different challenges, rather than being restricted to a single one.

The processing circuitry 220, the encoder 230 and the interface 240 may be realized as separate physical devices connected via interfaces, or as integrated sub-elements or software-defined functions within a single device. The apparatus 200 may be a standalone device (i.e., be provided in a standalone housing) or be for integration into a user device such as a laptop or server.

Analogously to the method 100, the apparatus 200 allows to achieve information-theoretic security for the stored data message D. If the data storage 250 is a publicly accessible data storage, the stored data *M* is public and potentially accessible by any party. The only secret remaining is the relationship between *S* and the quantum state ${ρ}_{X}^{⊗ n}$ encoded in the at least one quantum response of the QPUF 210, which an authorized user can reproduce by querying the QPUF 210.

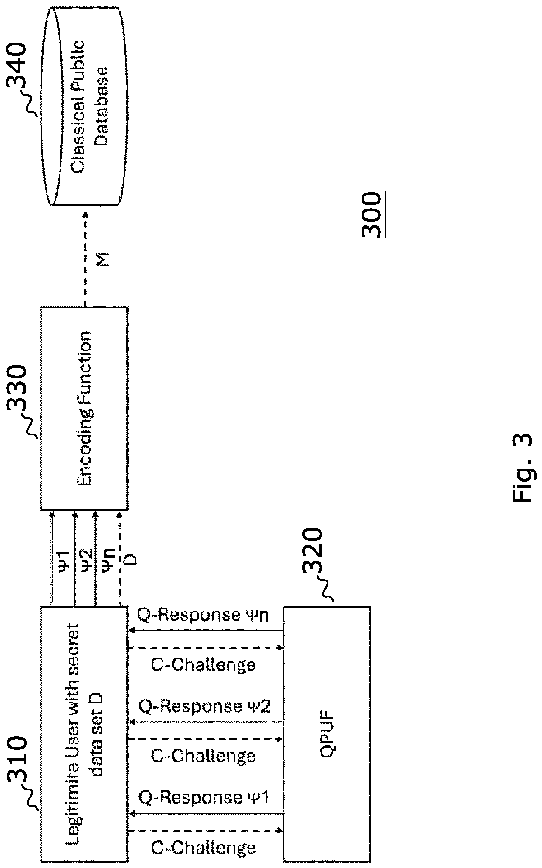

**Fig. 3** additionally illustrates an exemplary data flow 300 for storing the data message *D* in a data storage, which is depicted as a classical public database 340 in the example of Fig. 3.

A legitimate user 310 triggers that the QPUF 320 is queried n times, i.e., a chosen challenge sequence is applied to the QPUF 320 to obtain n quantum responses *ψ*1, *ψ*2, ..., *ψ*n which represent the quantum (response) state ${ρ}_{X}^{⊗ n}$. The quantum state ${ρ}_{X}^{⊗ n}$ is processed by the encoding function 330 together with the data message *D* to form a masked storage vector *M* as codeword (e.g., by XORing the data message *D* with a one-time pad derived from the quantum state ${ρ}_{X}^{⊗ n}$). The codeword *M* may be understood as a secure public message. Then, the codeword *M* is stored in (written to) the public database 340.

The QPUF 320 ensures that an eavesdropper who only sees the public database contents (and not the QPUF's quantum responses) gains negligible information about the data message *D* as the codeword *M* is statistically independent of data message *D.* The statistical independence provides perfect secrecy, i.e., *I*(*D; M*) *=* 0, so that storing the codeword *M* leaks no information about the data message D.

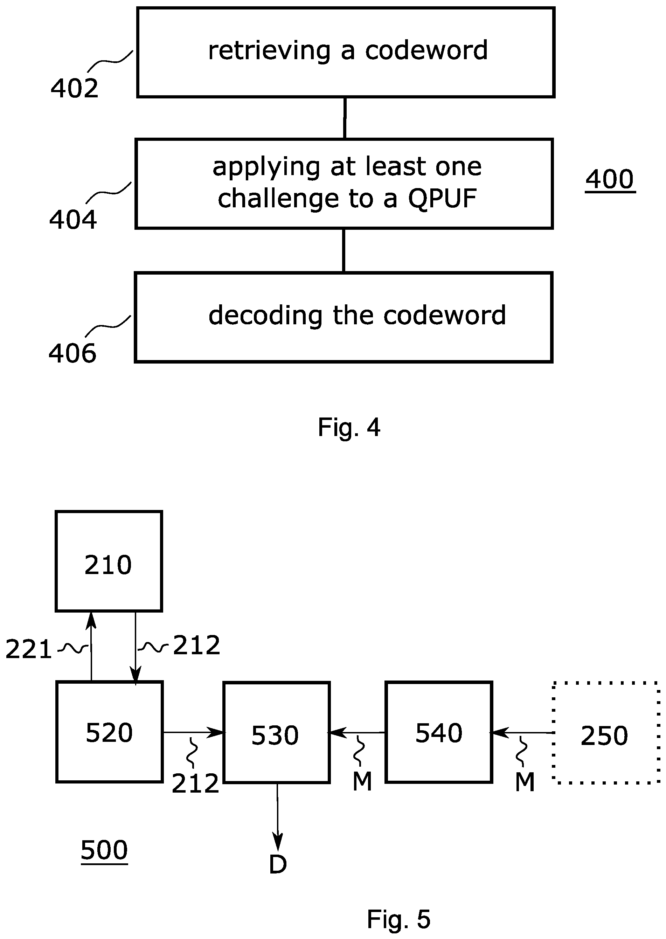

In addition to the enrollment phase described above with reference to Figs. 1 to 3, the proposed secure storage protocol further comprises a retrieval phase. The retrieval phase will be described in greater detail in the following with reference to Figs. 4 to 6.

**Fig. 4** illustrates a flowchart of an exemplary method 400 for method for retrieving a data message from a data storage. The method 400 comprises retrieving 402 a codeword from the data storage. In addition, the method 400 comprises applying 404 at least one challenge for a QPUF previously used for encoding the data message to the QPUF to obtain at least one quantum response. The method 400 further comprises decoding 406 the codeword based on the at least one quantum response to recover the data message.

The method 400 allows to provide secure, keyless access to the data message. Access to the data message is protected by two independent factors: physical possession of the specific QPUF device used for enrollment, and knowledge of the specific challenge that was applied. An attacker who only obtains the codeword from the database is unable to recover the data message without satisfying both of these conditions.

More details and aspects of the method 400 are explained in connection with the proposed technique or one or more examples described above or below. The method 400 may comprise one or more additional optional features corresponding to one or more aspects of the proposed technique or one or more examples described or below.

In particular, further details of the method 400 will be described in the following with reference to **Fig. 5** illustrating a corresponding apparatus 500 for retrieving the data message *D* from the data storage 250. The data message *D* was previously stored in the data storage 250 according to the enrollment procedure described above with reference to Figs. 1 to 3.

The apparatus 500 comprises the QPUF 210 described above.

In addition, the apparatus 500 comprises an interface 540 configured to retrieve the codeword *M* from the data storage 250. The codeword *M* was generated and stored in the data storage 250 during the enrollment procedure as described above with reference to Figs. 1 to 3. For example, the interface 540 may access the data storage 250 and retrieve the codeword *M* (e.g., by querying the codeword *M* or a related key). The interface 540 may be a hardware or software component - analogously to the interface 240 of the apparatus 200.

The apparatus 500 further comprises processing circuitry 520 configured to apply at least one challenge 221 for the QPUF previously used for encoding the data message D to the QPUF to obtain at least one quantum response 212 from the QPUF 210. In other words, the same at least one challenge 221 originally used for encoding the data message *D* is applied again to the identical QPUF 210. The processing circuitry 520 may be implemented similar or identical to the processing circuitry 220 described above and be configured to transmit the at least one challenge 221 to the QPUF 210 analogously to what is described above for the apparatus 200. As described above, the codeword may be stored together with an identifier for the at least one challenge 221 in the data storage 250. Accordingly, if the data *M* retrieved from the data storage 250 comprises the helper data *M*1 and the codeword M*2*, the identifier being part of the helper data *M*1 may be used to select the at least one challenge 221.

When a legitimate user wants to retrieve the stored data message *D,* they may trigger the processing circuitry 520 to apply the same at least one challenge 221 to the exact same QPUF 210. Accordingly, the at least one new quantum response 212 with the quantum state ${ρ}_{Y}^{⊗ n}$ will be obtained. Due to the inherent properties of the QPUF, the quantum state ${ρ}_{Y}^{⊗ n}$ yields essentially the same secret string (classical key) *S* as was obtained during enrollment.

Additionally, the apparatus 500 comprises a decoder 530 configured to decode the codeword *M* based on the at least one quantum response 212 to recover the data message *D.* The decoder 530 may be implemented in hardware or software. The encoder 530 may be or run on a classical system such as a FPGA, a CPU or a GPU.

The at least one quantum response 212 generated by the QPUF 210 during decoding may be transmitted to the decoder 530 via a quantum communication channel. This quantum channel is not shown in detail in Fig. 5 but is indicated schematically by the arrow pointing from the QPUF 210 towards the processing circuitry 520. The particular realization of this quantum channel depends on the specific design and implementation of the QPUF 210. Analogously to the encoding described above, for a photonic QPUF implementation, the quantum channel on the decoding side may comprise optical components such as dark fiber connections, beam splitters, polarizing beam splitters, phase shifters, delay lines, and single-photon detectors, ensuring secure and low-loss transmission of quantum states.

Alternatively, the at least one quantum response 212 may be digitized immediately at the output interface of the QPUF 210, resulting in one or more classical signals transferred to the decoder 530. Although this approach involves the transmission of sensitive quantum-derived information via an unsecured classical channel between the QPUF 210 and decoder 530, security may still be maintained if the QPUF 210 and the decoder 530 are arranged securely within a common housing, limiting potential risks of adversarial interference.

In general, the quantum channel may be established either directly between the QPUF 210 and the decoder 530 or between the QPUF 210 and an intermediate component, such as the processing circuitry 520 illustrated in Fig. 5. A direct quantum channel between the QPUF 210 and the decoder 530 may, e.g., be used if the quantum response is not digitized immediately at the output of the QPUF 210. Conversely, a quantum channel to an intermediate element, such as the processing circuitry 520, may be employed if the quantum response is digitized immediately at the QPUF output interface.

When decoding the codeword *M*, the decoder 530 may be configured to derive the classical key *S* from the at least one quantum response 212 with the quantum state ${ρ}_{Y}^{⊗ n}$. For deriving the classical key *S* from the at least one quantum response 212, the decoder 530 may be configured analogously to the encoder 230 to measure the at least one quantum response 212 at least once to obtain a raw classical key and generate the classical key *S* by processing the raw classical key to increase its statistical uniformity (e.g., performing privacy amplification and/or hashing). Due to the inherent properties of the QPUF 210, the quantum state ${ρ}_{Y}^{⊗ n}$ yields essentially the same secret string (classical key) S as was obtained during enrollment. As described above, the codeword may be stored together with error-correction data in the data storage 250. Accordingly, if the data *M* retrieved from the data storage 250 comprises the helper data *M*1 and the codeword *M*2, the error-correction data being part of the helper data *M*1 may be used in deriving the classical key from the at least one quantum response 212 to perform "noise correction" to ensure that the classical key *S* regenerated during the decoding operation is identical to the classical key *S* that was originally used for encoding.

The decoder 530 is then further configured to use the classical key *S* in decoding the codeword *M* to recover the data message *D.* For example, the decoder 530 may be configured to recover the original data message *D* by bitwise XORing at least part of the codeword *M*2 and the classical key *S,* i.e., *D = S* ⊕ *M*₂. Other techniques such as modular subtraction may be used instead of XORing.

The data message *D* is recovered exactly (except with arbitrarily small error probability due to finite block length effects or noise, which may be made negligible with proper coding). No information-theoretic link is revealed to anyone without the classical key *S,* so the data message D remains confidential.

The processing circuitry 520, the decoder 530 and the interface 540 may be realized as separate physical devices connected via interfaces, or as integrated sub-elements or software-defined functions within a single device. The apparatus 500 may be a standalone device (i.e., be provided in a standalone housing) or be for integration into a user device such as a laptop or server.

Analogously to the method 400, the apparatus 500 allows to provide secure, keyless access to the data message *D* stored in the data storage 250.

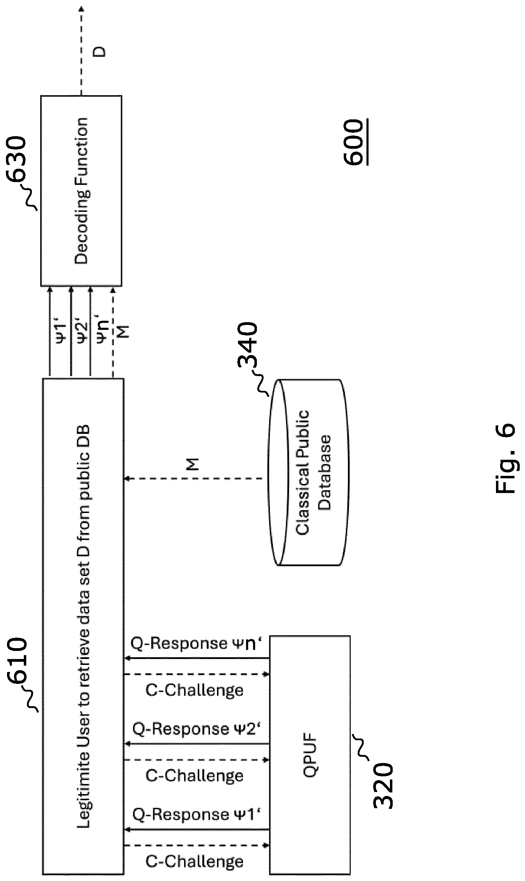

**Fig. 6** additionally illustrates an exemplary data flow 600 for retrieving the data message *D,* which was previously stored in the public database 340 with the data flow 300 illustrated in Fig. 3, from the public database 340.

A legitimate user 610 triggers that the QPUF 320 previously used for the enrollment is again queried n times, i.e., the same challenge sequence is re-applied to the QPUF 320 to obtain n new correlated quantum responses *ψ*1*', ψ*2*',* ..., *ψn*' which represent the quantum (response) state ${ρ}_{Y}^{⊗ n}$ ( ${ρ}_{Y}^{⊗ n}$ may be understood as a noisy version of ${ρ}_{X}^{⊗ n}$).The quantum state ${ρ}_{Y}^{⊗ n}$ is processed by the decoding function 630 together with the publicly stored codeword *M* as described above to reconstruct the original data message *D.*

The QPUF ensures secrecy because an eavesdropper who sees only the codeword *M* (and who knows the general scheme but not the QPUF) cannot compute the classical key *S* from the codeword *M.* In information-theoretic terms, the mutual information *I*(*D; M*) is zero (or arbitrarily small) as the classical key *S* is truly random and independent of the data message *D.* The one-time pad nature of the mask guarantees that the original data message *D* is statistically independent of the codeword *M.* Furthermore, the codeword *M* may include additional random filling or coding to meet storage or privacy constraints. The QPUF acts as a secure key generator: each time the at least one challenge is applied, a new fresh classical key *S* is effectively drawn from a large space using, e.g., the Classical-Quantum Slepian-Wolf protocol, and it is infeasible for an adversary to predict or replicate it.

By information-theoretic analysis, the maximum size of *D* (number of bits or symbols) that may be securely stored per use of the QPUF is bounded by the QPUF's entropy generation and the secrecy constraints. In simple terms, the secure storage rate is (in mutualinformation terms) upper bounded by ${lim}_{n \to ∞} {sup}_{\left.Λ, T\right| X} \frac{1}{n} \left(I\left(\left.{X}^{n}; {Y}^{n}\right|{T}^{n}\right)\right)$, where *T* is an auxiliary random variable representing any internal randomness in the encoding, that depends on *x. x*ⁿ and *yⁿ* are the quantum system denoting QPUF outputs at enrollment and retrieval. Λ. is the quantum measurement performed at the enrollment phase. The proposed secure storage protocol achieves the largest possible secret storage rate under the given QPUF channel and storage constraints. The system may also generate a fresh secret key after retrieval, allowing the same QPUF to be reused multiple times or even repeatedly used to perform the protocol on multiple messages securely.

In the proposed secure storage protocol, the QPUF provides secrecy: an unauthorized adversary who sees only the public codeword *M* cannot learn the data message *D* because the unauthorized adversary does not know the QPUF's challenge response. By the quantum no-cloning theorem, the unauthorized adversary cannot duplicate the QPUF's unknown state. The data message *D* is statically independent from the codeword *M.* Therefore, any adversary does not gain any information about the secret data.

The proposed secure storage protocol also provides privacy, that is it bounds the privacy leakage: an unauthorized adversary who sees only the public codeword *M* cannot learn the QPUF response ${ρ}_{X}^{⊗ n}$. The privacy leakage rate is the information about the QPUF response that the codeword and other helper data leaks and is measured by the mutual information between QPUF output and whatever the unauthorized adversary observes that is $\frac{1}{n} I \left({ρ}_{X}^{⊗ n}; M\right)$*,* which for the protocol presented is bounded by *I*(*T; X*) *- I*(*X*;*Y* |*T*)*.*

The secret storage capacity *Cₛ* is the supremum of rates $R = \frac{log \left|D\right|}{n}$ such that the error in decoding operation and secrecy leakage is asymptotically goes to zero. The proposed secure storage protocol gives ${C}_{S} = {lim}_{n \to ∞} {sup}_{\left.Λ, T\right| X} \frac{1}{n} \left(I\left(\left.{X}^{n}; {Y}^{n}\right|{T}^{n}\right)\right) ,$ and the public storage rate is given by $\frac{1}{n} I \left({T}^{n}; {X}^{n}\right)$*.* This public storage rate quantifies amount of public storage bits required to store each bit of secure data.

According to the present disclosure, data may be stored with arbitrarily small secrecy leakage as long as the QPUF inherently produces enough private randomness. This yields a correct decoding with arbitrarily low error probability, satisfying reliability. It may operate with minimal secrecy and privacy leakage (even zero privacy leakage with pre-shared secret keys).

The present disclosure provides secure storage of data. The proposed secure storage protocol leverage the inherent unclonability and randomness of the QPUF to achieve information-theoretic secrecy. In particular, perfect secrecy is provided as the (public) storage data reveal negligible information about the data message, e.g., *I*(*D; M*) *=* 0 or similarly constrained. Quantum protection is provided as the unclonability of the quantum challenge-response prevents duplication or easy forging of responses. In addition, flexible security levels are provided as unconditional privacy leakage bounds or even zero leakage are allowed if shared private randomness is pre-established between encoder and decoder. Thus, the present disclosure provides a rigorous foundation for quantum-secure storage systems that maintain low latency and energy use while protecting data and query privacy in adversarial environments. This versatility caters to diverse scenarios, from loT devices with limited resources to high-security databases.

In the above examples, the data storages 250 or 340 may be key-value stores and the data message D may be intended to be stored as a value in the key-value store. In these examples, the enrollment phase may further comprise encoding a plaintext key for the data message D based on the at least one quantum response 211 to generate an encrypted key and storing the encrypted key in the key-value store together with the codeword *M*. Likewise, the retrieval phase may further comprise encoding a plaintext key for the data message *D* based on the at least one quantum response 212 to generate an encrypted key. Furthermore, the retrieval phase may further comprise querying the key-value store using the encrypted key to retrieve the codeword *M*.

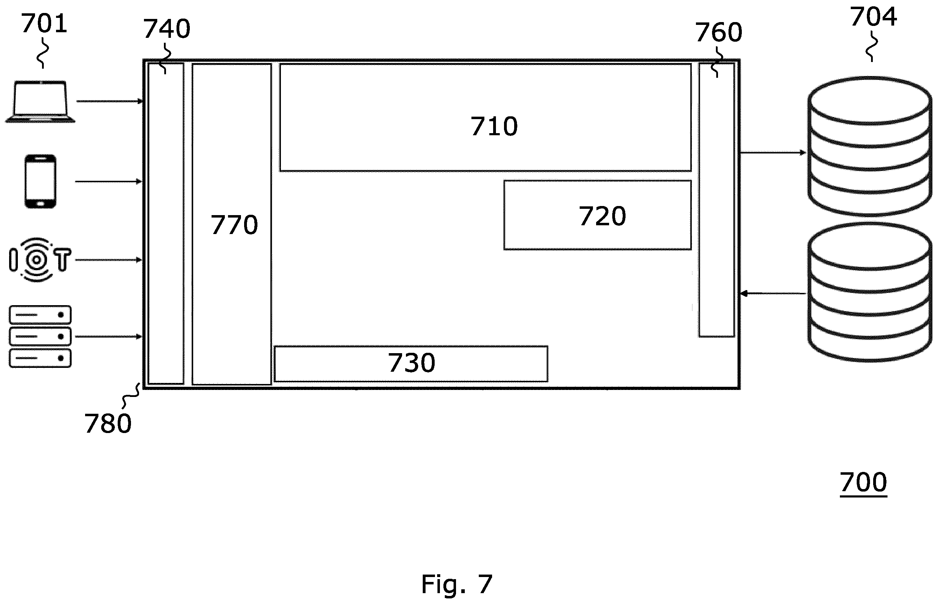

**Fig. 7** further illustrates an exemplary apparatus 700 for data storage and retrieval in accordance with the proposed secure storage protocol.

The apparatus 700 comprises a QPUF 710 as described above. The QPUF 710 is capable of receiving queries over a classical communication channel - such as fiber, Ethernet or Wi-Fi - using standardized classical IT protocols (e.g., HTTP, HTTPS, RPC, XML, JSON or streaming protocols). It converts the received classical challenges into quantum states, which may include photons with various encodings, fermionic or bosonic gases, superconducting or superfluid systems, or atomic systems - each potentially in single, clustered, physical, or error-corrected form. These quantum states are then transmitted to the encoders via a quantum communication channel, such as standard single-mode or multi-mode optical fibers, hollow-core fibers, or free-space optical links. The specific physical realization of the QPUF 710 does not matter for the proposed secure storage protocol.

Additionally, the apparatus 700 comprises a combined encoder & decoder 720 as described above for encoding of classical data messages *D* into secure data messages (codewords) *M,* as well as decoding of secure classical messages (codewords) *M.* The combined encoder & decoder 720 may be either a classical system (such as a FPGA, CPU or GPU) or a quantum system (including quantum computers based on atoms, photons, charge, or flux qubits), with quantum states provided by the QPUF 710. In the example of Fig. 7, the combined encoder & decoder 720 performs the querying of the QPUF 710 (i.e., the combined encoder & decoder 720 performs the functionalities of the processing circuitry described above).

The apparatus 700 further comprises interfaces 730, 740, 750 and 760. The interface 730 is a quantum interface for importing quantum states (quantum responses) from the QPUF 710. The interface 740 is a classical interface for receiving user data from external devices 701 such as laptops, servers, mobile phones or loT devices. The interface 760 is for sending data to or retrieving data from external publicly accessible data storages 704 such as public databases or blockchains.

In addition, the apparatus 700 comprises a process manager 770, which may be a classical application, to orchestrate and execute the encoding and decoding operations.

The apparatus 700 is a stand-alone device, i.e., the above described components of the apparatus 700 are arranged within a housing 780 of the apparatus 700.

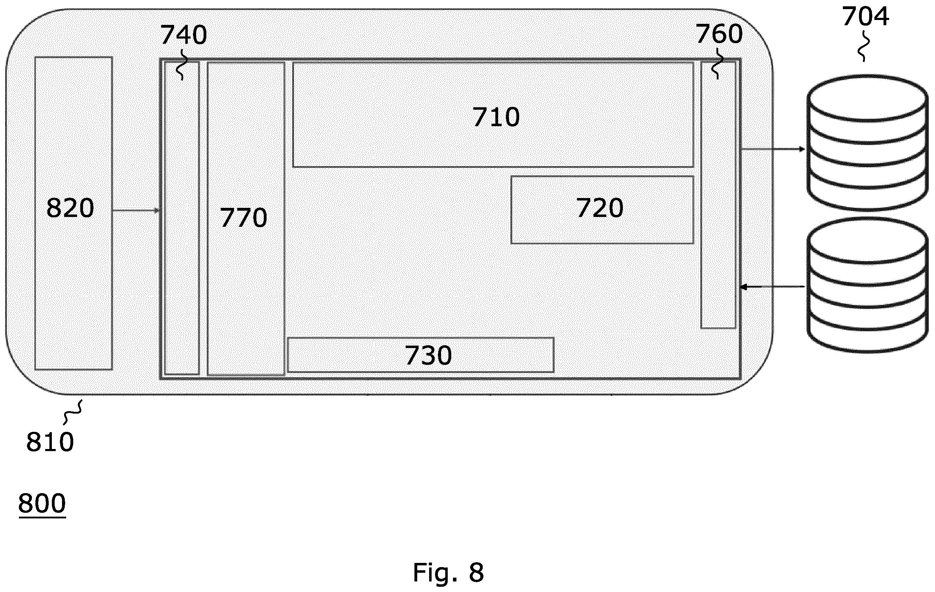

**Fig. 8** illustrates an exemplary user device 800 such as a laptop, a server, a mobile phone or an loT device. The apparatus 700 described above is integrated into the user device 800. The apparatus 700 is coupled to a processor 820 of the user device 800. The integration of the apparatus 700 into the user device 800 enables a high degree of miniaturization, allowing the apparatus 700 to fit within the housing 810 of user device 800.

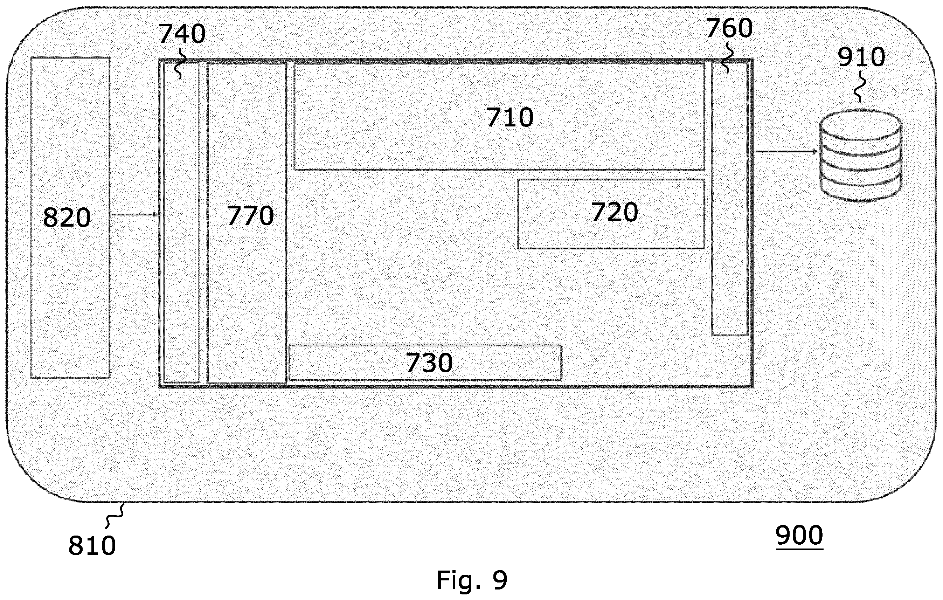

**Fig. 9** illustrates an exemplary monolithic user device 900. In comparison to the user device 800 described above, the interface does not exchange data with an external data storage but with an internal data storage 910 of the user device 900 such as a flash drive or hard disk. The data do not leave the user device 900 such that the data storage 910 may be understood as an internal QPUF storage.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (100) for storing a data message in a data storage, the method (100) comprising:
applying (102) at least one challenge to a Quantum Physically Unclonable Function, QPUF, to obtain at least one quantum response;
encoding (104) the data message based on the at least one quantum response to generate a codeword; and
storing (106) the codeword in the data storage.

2. The method (100) of claim 1, wherein encoding (104) the data message comprises:
deriving a classical key from the at least one quantum response; and
encoding the data message based on the derived classical key.

3. The method (100) of claim 2, wherein deriving the classical key from the at least one quantum response comprises:
measuring the at least one quantum response at least once to obtain a raw classical key; and
generating the classical key by processing the raw classical key to increase its statistical uniformity.

4. The method (100) of claim 3, wherein processing the raw classical key comprises at least one of privacy amplification or hashing.

5. The method (100) of claim 3 or claim 4, further comprising:
deriving a second classical key from the at least one quantum response subsequent to measuring the quantum response; and
encoding a second data message based on the second classical key.

6. The method (100) of any one of claim 2 to 5, wherein encoding the data message based on the derived classical key comprises bitwise XORing the data message and the classical key.

7. The method (100) of any one of claim 2 to 6, wherein the classical key has a length at least as great as a length of the data message.

8. The method (100) of any one of claims 1 to 7, wherein encoding (104) the data message comprises generating error-correction data, and wherein the method (100) further comprises storing the error-correction data together with the codeword in the data storage.

9. The method (100) of any one of claims 1 to 8, wherein the method (100) further comprises storing an identifier for the at least one challenge together with the codeword in the data storage.

10. The method (100) of any one of claims 1 to 9, wherein the data storage is a key-value store, and wherein the data message is intended to be stored as a value in the key-value store, and wherein the method (100) further comprises:
encoding a plaintext key for the data message based on the at least one quantum response to generate an encrypted key; and
storing the encrypted key in the key-value store together with the codeword.

11. A method (400) for retrieving a data message from a data storage, the method (400) comprising:
retrieving (402) a codeword from the data storage;
applying (404) at least one challenge for a Quantum Physically Unclonable Function, QPUF previously used for encoding the data message to the QPUF to obtain at least one quantum response; and
decoding (406) the codeword based on the at least one quantum response to recover the data message.

12. The method (400) of claim 11, wherein decoding (406) the codeword based on the at least one quantum response to recover the data message comprises:
deriving a classical key from the at least one quantum response; and
using the classical key in decoding the codeword to recover the data message.

13. The method (400) of claim 12, wherein deriving the classical key from the at least one quantum response comprises:
measuring the at least one quantum response at least once to obtain a raw classical key; and
generating the classical key by processing the raw classical key to increase its statistical uniformity.

14. The method (400) of claim 13, wherein processing the raw classical key comprises at least one of privacy amplification or hashing.

15. The method (400) of any one of claims 11 to 14, wherein the method (400) further comprises retrieving an identifier for the at least one challenge stored together with the codeword in the data storage, and wherein the at least one challenge applied to the QPUF is selected based on the retrieved identifier.
